(19) Europäisches Patentamt
European Patent Office
Office européen des brevets

(11) **EP 2 539 187 B1**

(12) **EUROPÄISCHE PATENTSCHRIFT**

(45) Veröffentlichungstag und Bekanntmachung des Hinweises auf die Patenterteilung:
**10.08.2016  Patentblatt 2016/32**

(21) Anmeldenummer: **11708985.4**

(22) Anmeldetag: **23.02.2011**

(51) Int Cl.:
**B60R 25/00** *(2013.01)*    **E05F 15/00** *(2015.01)*

(86) Internationale Anmeldenummer:
**PCT/EP2011/000877**

(87) Internationale Veröffentlichungsnummer:
**WO 2011/104012 (01.09.2011 Gazette 2011/35)**

(54) **VERFAHREN FÜR DEN BETRIEB DES ELEKTRISCHEN BORDNETZES EINES KRAFTFAHRZEUGS**

METHOD FOR OPERATING THE ON-BOARD ELECTRICAL POWER SYSTEM OF A MOTOR VEHICLE

PROCÉDÉ POUR FAIRE FONCTIONNER LE RÉSEAU DE BORD ÉLECTRIQUE D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2010  DE 102010009058**

(43) Veröffentlichungstag der Anmeldung:
**02.01.2013  Patentblatt 2013/01**

(73) Patentinhaber: **Brose Fahrzeugteile GmbH & Co. Kommanditgesellschaft, Bamberg**
**96052 Bamberg (DE)**

(72) Erfinder:
• **FUCHS, Thorsten**
 **96103 Hallstadt (DE)**
• **HERING, Matthias**
 **91301 Forchheim (DE)**
• **WÜRSTLEIN, Holger**
 **97475 Zeil am Main (DE)**
• **SCHINDHELM, Thomas**
 **96524 Neuhaus-Schierschnitz (DE)**
• **RUSS, Detlef**
 **96237 Ebersdorf (DE)**

(74) Vertreter: **Gottschald, Jan**
**Patentanwaltskanzlei Gottschald**
**Am Mühlenturm 1**
**40489 Düsseldorf (DE)**

(56) Entgegenhaltungen:
EP-A1- 1 699 018    EP-A1- 1 902 912
EP-A2- 1 158 122    WO-A1-2006/015418
DE-A1-102004 027 541    DE-A1-102008 063 366
US-A1- 2009 164 072

**Beschreibung**

Die Erfindung betrifft ein Verfahren für den Betrieb des elektrischen Bordnetzes eines Kraftfahrzeugs gemäß Anspruch 1 sowie ein Kraftfahrzeug mit einem elektrischen Bordnetz, insbesondere zur Durchführung dieses Verfahrens, gemäß Anspruch 11.

Die elektrischen Bordnetze heutiger Kraftfahrzeuge sind mit einer Vielzahl elektrischer Verbraucher ausgestattet, die zu einem erheblichen Teil der Realisierung von Komfortfunktionen dienen. Der Energieverbrauch solcher Bordnetze kann je nach Verbraucher auch im Standbetrieb beträchtlich sein, was im ungünstigsten Fall zu einem vollständigen Entladen der Fahrzeugbatterie führen kann. Dabei spielt neben dem Energieverbrauch der einzelnen elektrischen Verbraucher der Energieverbrauch des Bussystems des Bordnetzes eine besondere Rolle. Heutige Bussysteme sind nämlich in der Regel so ausgelegt, dass das Aufwecken eines Verbrauchers mit dem Aufwecken des gesamten Bussystems einhergeht, was den Energieverbrauch signifikant erhöht.

Eine der obigen Komfortfunktionen ist die sogenannte "Keyless-Entry-Funktion". Den bekannten Keyless-Entry-Systemen ist gemeinsam, dass ein insbesondere funkbasierter Authentifizierungsdialog zwischen einer kraftfahrzeugseitigen Keyless-Entry-Steuereinheit und einem benutzerseitigen Funkschlüssel o. dgl. vorgesehen ist, um die Zugangsberechtigung des Benutzers zu überprüfen. Nach erfolgreichem Authentifizierungsdialog und gegebenenfalls weiteren Bedienereignissen wird das Kraftfahrzeug entriegelt und/oder, je nach Auslegung, ggf. eine Klappe o. dgl. motorisch betätigt.

Eine bekannte Anordnung mit Keyless-Entry-Funktion (DE 103 33 894 A1) sieht vor, dass die Keyless-Entry-Steuereinheit permanent oder zyklisch abfragt, ob ein Funkschlüssel für den Authentifizierungsdialog vorhanden ist. Da dies mit einem entsprechend permanenten oder zyklischen Entladen der Fahrzeugbatterie verbunden ist, wird dort vorgeschlagen, für die Keyless-Entry-Funktion einen zusätzlichen Energiespeicher vorzusehen.

Zur Reduzierung des Energieverbrauchs des Bordnetzes eines Kraftfahrzeugs wurde auch vorgeschlagen, die Steuereinheit zeitweise zumindest zum Teil in einen energiesparenden Standby-Modus zu überführen und situationsgerecht in einen Betriebs-Modus aufzuwecken (DE 10 2004 027 541 A1). Eine Herausforderung bei diesem Verfahren, das den Ausgangspunkt für die vorliegende Erfindung darstellt, ist das korrekte Schalten zwischen dem Standby-Modus und dem Betriebsmodus, nämlich derart, dass weder eine Beeinträchtigung der jeweils gewünschten Funktion noch eine Anfälligkeit gegenüber äußeren Einflüssen oder Mißbrauch gegeben ist.

Aus der WO 2006/015418 A1 ist ferner ein Funküberwachungssystem einschließlich einer Basiseinheit mit weinigstens einem Basis HF-Sendeempfänger, wenigstens zwei zueinander fest angeordneten Sendeempfänger-Antennen die der Basisemheit zugeordnet sind und wenigstens einem Sende empfanger welcher relativ zu den Sendeempfänger-Antennen beweglich ist, wobei der bewegliche Sendeempfanger über Ultrahochfrequenz-Funksignalen mit der Basiseinheit kommuniziert und die Basiseinheit in der Lage ist, eine relative Postition des beweglichen Sendeempfänger zumindest näherungsweise zu bestimmen.

Der Erfindung liegt das Problem zugrunde, das bekannte Verfahren für den Betrieb des Bordnetzes eines Kraftfahrzeugs derart weiterzubilden, dass die Überführung der Steuereinheit in den Standby-Modus und den Betriebs-Modus ohne funktionale Beeinträchtigung und mit hoher Robustheit gegenüber äußeren Einflüssen oder Mißbrauch erfolgt.

Das obige Problem wird bei einem Verfahren gemäß dem Oberbegriff von Anspruch 1 durch die Merkmale des kennzeichnenden Teils von Anspruch 1 gelöst.

Wesentlich ist zunächst, dass ein vorbestimmtes Aufweck-Bedienereignis, insbesondere die Annäherung einer Person, mittels einer Sensoranordnung erfasst wird. Dies ermöglicht grundsätzlich ein für den Benutzer unmerkliches, situationsbedingtes Aufwecken der Steuereinheit.

Allerdings besteht hier die Gefahr, dass versehentlich oder durch Mißbrauch Aufweck-Bedienereignisse "erzeugt" und von der Sensoranordnung erfasst werden können. Ein Beispiel hierfür sind spielende Kinder, die das obige Aufweck-Bedienereignis mehrfach wiederholen, so dass die Steuereinheit und im Ergebnis auch das Bussystem des Bordnetzes mehrfach ungewollt aufgeweckt werden. Ähnliches können sich im Wind bewegende Äste o. dgl. bewirken, sofern diese von der Sensoranordnung erfasst werden.

Die obigen, äußeren Einflüsse, die fehlerhafterweise als Aufweck-Bedienereignisse erkannt werden, haben gemeinsam, dass sie in kurzen Zeitabständen zur fehlerhaften Erfassung mehrerer Aufweck-Bedienereignissen führen.

Die Wahrscheinlichkeit dafür, dass die Steuereinheit tatsächlich aufgeweckt werden soll, lässt sich also an den Zeitabständen zwischen den jeweiligen Aufweck-Bedienereignissen erkennen. Es wird daher vorgeschlagen, dass jedem erfassten Aufweck-Bedienereignis ein Zeitabstand zu dem jeweils vorangegangenen Aufweck-Bedienereignis zugeordnet wird, der bei der Erfassung eines Bedienereignisses ermittelt wird. In Abhängigkeit von dem Zeitabstand wird die Steuereinheit schließlich aufgeweckt oder nicht aufgeweckt. Mit der vorschlagsgemäßen Lösung lässt sich das ungewünschte Aufwecken der Steuereinheit aufgrund äußerer Einflüsse in erheblichem Maße reduzieren.

Die vorschlagsgemäße Lösung zeigt ein besonders gut handhabbares Verfahren, bei dem jedem Aufweck-Bedienereignis ein bestimmter Wert - Abschaltindikator - zugeordnet ist, der in Bezug auf eine Abschaltschwelle vorgibt, ob die Steuereinheit aufgeweckt oder eben nicht aufgeweckt werden soll.

Die vorschlagsgemäße Lösung gewährleistet weiter, dass insbesondere geringe Zeitabstände zu einer Änderung des Abschaltindikators in Richtung der Abschaltschwelle führen und dass diese Änderung umso größer ist, je kleiner der aktuelle Zeitabstand ist. Dies trägt dem Umstand Rechnung, dass bei normalbetriebsgemäßer Bedienung mehrere Aufweck-Bedienereignisse, die in kurzen Zeitabständen aufeinanderfolgen, sehr unwahrscheinlich sind.

Die weiter bevorzugten Ausgestaltungen gemäß den Ansprüchen 5 bis 8 betreffen die Ermittlung des Abschaltindikators aus den Zeitabständen über eine Folge erfasster Aufweck-Bedienereignisse. Damit lässt sich die Höhe des Abschaltindikators in Abhängigkeit von den Zeitabständen einer Folge vorangegangener Aufweck-Bedienereignisse steuern.

Nach einer weiteren Lehre, der ebenfalls eigenständige Bedeutung zukommt, wird das obige Problem bei einem Kraftfahrzeug gemäß dem Oberbegriff von Anspruch 11 durch die Merkmale des kennzeichnenden Teils von Anspruch 11 gelöst.

Wesentlich ist auch hier, dass das elektrische Bordnetz des Kraftfahrzeugs so getroffen ist, dass bei der Erfassung eines Aufweck-Bedienereignisses der zugeordnete Zeitabstand ermittelt und in Abhängigkeit von dem Zeitabstand die Steuereinheit aufgeweckt oder eben nicht aufgeweckt wird. Zur Erläuterung dieser weiteren Lehre darf auf alle das vorschlagsgemäße Verfahren betreffenden Ausführungen verwiesen werden.

Im Folgenden wird die Erfindung anhand einer lediglich ein Ausführungsbeispiel darstellenden Zeichnung näher erläutert. In der Zeichnung zeigt

Fig. 1    den Heckbereich eines vorschlagsgemäßen Kraftfahrzeugs zur Durchführung des vorschlagsgemäßen Verfahrens und

Fig. 2    einen beispielhaften zeitlichen Verlauf des Abschaltindikators nach dem vorschlagsgemäßen Verfahren.

Das vorschlagsgemäße Verfahren beschreibt den Betrieb des elektrischen Bordnetzes eines Kraftfahrzeugs 1 mit einer Steuereinheit 2, die hier und vorzugsweise als Keyless-Entry-Steuereinheit ausgestaltet ist. Eine solche KeylessEritry-Steuereinheit 2 umfasst alle Komponenten, die für die Umsetzung eines Authentifizierungsdialogs erforderlich sind.

Der Begriff "Steuereinheit" ist hier weit zu verstehen und kann auch lediglich Teile einer in sich abgeschlossenen Steuerung umfassen. Wesentlich ist dabei, dass die Steuereinheit 2 ausgehend von einem energiesparenden Standby-Modus in einen Betriebs-Modus aufweckbar ist. Bei dem Standby-Modus kann es sich auch schlicht um den ausgeschalteten Zustand der Steuereinheit 2 handeln. Im Falle der Keyless-Entry-Steuereinheit bedeutet das Aufwecken in den Betriebs-Modus in der Regel, dass der Authentifizierungs-Dialog gestartet wird.

Der Steuereinheit 2 ist ein vorbestimmtes Aufweck-Bedienereignis B zugeordnet, das mittels einer Sensoranordnung 3 erfasst wird und das bei bestimmten Randbedingungen das Aufwecken der Steuereinheit 2 bewirken kann. Bei dem Aufweck-Bedienereignis B kann es sich je nach Auslegung der Sensoranordnung 3 um die Annäherung einer Person, um die Betätigung eines Türgriffs o. dgl. handeln.

Vorliegend ist stets von dem Bedienereignis $B_n$ die Rede. Damit ist bei einer Folge durch die Sensoranordnung 3 erfasster Aufweck-Bedienereignisse B das n-te Aufweck-Bedienereignis B gemeint.

Wesentlich ist nun, dass jedem Aufweck-Bedienereignis $B_n$ ein Zeitabstand $\Delta t_n$ zu dem jeweils vorangegangenen Aufweck-Bedienereignis $B_{n-1}$ zugeordnet ist. Bei der Erfassung eines Aufweck-Bedienereignisses $B_n$ wird der zugeordnete Zeitabstand $\Delta t_n$ ermittelt, wobei in Abhängigkeit von dem Zeitabstand $\Delta t_n$ die Steuereinheit 2 aufgeweckt oder nicht aufgeweckt wird.

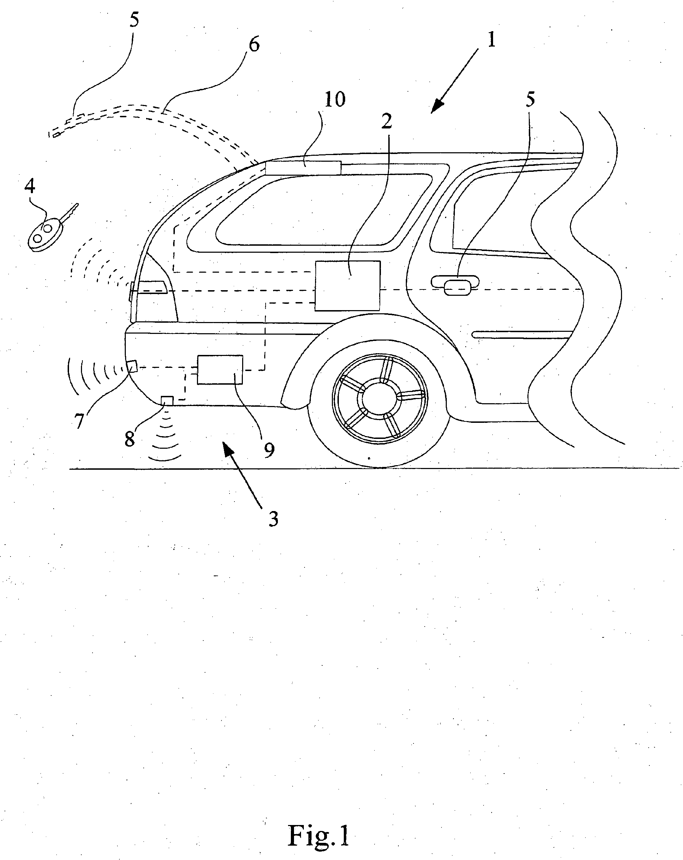

Hier und vorzugsweise ist das Bordnetz des Kraftfahrzeugs mit einem Bussystem ausgestattet, das die Anbindung verschiedenster elektrischer Komponenten des Kraftfahrzeugs erlaubt. Vorzugsweise ist auch die Steuereinheit 2 an das Bussystem des Kraftfahrzeugs angebunden. Insoweit sind die in Fig. 1 dargestellten Verbindungen nur schematisch und funktionsorientiert zu verstehen. Tatsächlich sind diese Verbindungen regelmäßig über das Bussystem realisiert. Entsprechend geht mit einem Aufwecken der Steuereinheit 2 ein zumindest teilweises, insbesondere vollständiges Aufwecken des Bussystems einher. Im Hinblick auf den mit dem Aufwecken des Bussystems verbundenen Energiebedarf zeigt sich die Vorteilhaftigkeit des vorschlagsgemäßen Verfahrens besonders deutlich.

Wie oben schon angesprochen, ist die Steuereinheit 2 hier und vorzugsweise als Keyless-Entry-Steuereinheit ausgestaltet. Entsprechend löst das Aufwecken der Steuereinheit 2 einen insbesondere funkbasierten Authentifizierungsdialog mit einem Funkschlüssel 4 des Benutzers aus. Hierfür ist der Steuereinheit 2 eine nicht dargestellte Antennenanordnung zugeordnet, die vorzugsweise in den Türaußengriffen 5 des Kraftfahrzeugs untergebracht sind.

Nach erfolgreichem Authentifizierungsdialog und gegebenenfalls nach der Erfassung eines weiteren Bedienereignisses durch die Sensoranordnung 3 wird eine Klappe, hier die Heckklappe 6 des Kraftfahrzeugs 1, motorisch geöffnet. Eine bevorzugte Variante für das weitere Bedienereignis wird weiter unten noch erläutert.

Jedem Aufweck-Bedienereignis $B_n$ ist ein bestimmter Wert - Abschaltindikator $A_n$ - zugeordnet, der bei jeder Erfassung eines Aufweck-Bedienereignisses $B_n$ basierend auf dessen Zeitabstand $\Delta t_n$ ermittelt wird, wobei in Abhängigkeit von der Höhe des Abschaltindikators $A_n$ in Bezug auf eine Abschaltschwelle $S_0$ die Steuereinheit 2 in obigem Sinne aufgeweckt oder eben nicht aufgeweckt wird.

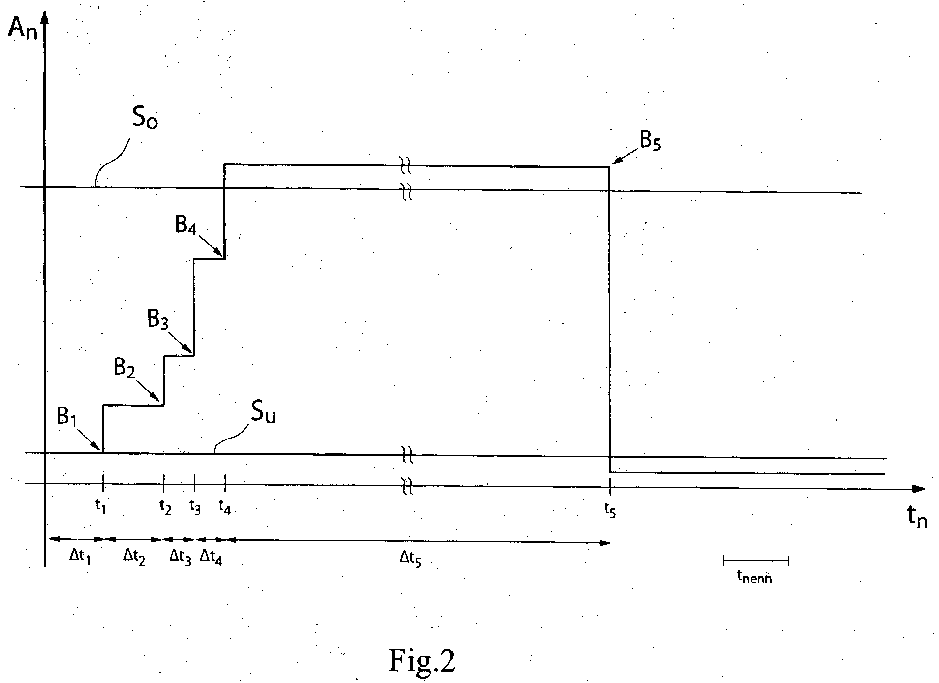

Fig. 2 zeigt einen beispielhaften Verlauf des Abschaltindikators $A_n$ bei insgesamt fünf Aufweck-Bedienereignissen $B_1$-$B_5$. Aus dieser Darstellung wird bereits deutlich, dass die Höhe des Abschaltindikators $A_n$ - jedenfalls auch - von dem zugeordneten Zeitabstand $\Delta t_n$ abhängt.

Hier und vorzugsweise ist es vorgesehen, dass aus dem Normalbetrieb heraus bei der Erfassung eines Aufweck-Bedienereignisses $B_n$ die Steuereinheit 2 aufgeweckt wird, sofern der Abschaltindikator $A_n$ unterhalb der Abschaltschwelle $S_o$ bleibt. Bei dem in Fig. 2 dargestellten Verlauf bedeutet dies, dass bei der Erfassung des vierten Aufweck-Bedienereignisses $B_4$ kein Aufwecken der Steuereinheit 2 mehr erfolgt (Abschaltbetrieb).

In Fig. 2 dargestellt ist auch eine untere Schaltschwelle $S_u$, deren Unterschreiten aus dem Abschaltbetrieb heraus das Aufwecken der Steuereinheit 2 bewirkt. Damit lässt sich im Hinblick auf das Schaltverhalten eine gewisse Hysterese einstellen. Auf die untere Schaltschwelle $S_u$ kann bei bestimmten Randbedingungen aber auch verzichtet werden.

In Abhängigkeit von dem aktuellen Zeitabstand $\Delta t_n$ erfährt der aktuelle Abschaltindikator $A_n$ gegenüber dem vorangegangenen Abschaltindikator $A_{n-1}$ im Normalbetrieb eine Änderung in Richtung der Abschaltschwelle $S_o$ oder eine Änderung von der Abschaltschwelle $S_o$ weg. Gemäß Fig. 2 handelt es sich hier und vorzugsweise bei einer Änderung in Richtung der Abschaltschwelle $S_o$ um eine Erhöhung des Abschaltindikators $A_n$.

Die obige Änderungsrichtung des Abschaltindikators $A_n$ hängt wie angesprochen von dem aktuellen Zeitabstand $\Delta t_n$ ab. Hierfür ist ein Nenn-Zeitabstand $\Delta t_{nenn}$ definiert, der beispielsweise auf den durchschnittlichen Zeitabstand $\Delta t_n$ im Normalbetrieb zurückgeht. Liegt nun der aktuelle Zeitabstand $\Delta t_n$ unterhalb des Nenn-Zeitabstands $\Delta t_{nenn}$ so geht die Erfassung des Aufweck-Bedienereignisses $B_n$ mit einiger Wahrscheinlichkeit auf ein ungewünschtes Aufweck-Bedienereignis zurück, so dass der Abschaltindikator $A_n$ in Richtung der Abschaltschwelle $S_o$ geändert, hier erhöht wird. Andernfalls wird der Abschaltindikator $A_n$ entsprechend reduziert. Bei dem Nenn-Zeitabstand $\Delta t_{nenn}$ kann es sich auch um eine Variable handeln, die in regelmässigen Abständen insbesondere automatisch verändert, insbesondere an das Benutzungsverhalten des aktuellen Benutzers angepasst, wird.

Es lässt sich der Darstellung in Fig. 2 auch die Tatsache entnehmen, dass eine Änderung des aktuellen Abschaltindikators $A_n$ gegenüber dem vorangegangenen Abschaltindikator $A_{n-1}$ in Richtung der Abschaltschwelle $S_o$ umso größer ist, je kleiner der aktuelle Zeitabstand $\Delta t_n$ ist. In Fig. 2 zeigt sich dies beispielsweise in einem Vergleich des Aufweck-Bedienereignisses $B_2$ und des Aufweck-Bedienereignisses $B_3$. Dem Aufweck-Bedienereignis $B_2$ ist der Zeitabstand $\Delta t_2$ und dem Aufweck-

Bedienereignis $B_3$ ist der Zeitabstand $\Delta t_3$ zugeordnet. Da der Zeitabstand $\Delta t_2$ größer ist als der Zeitabstand $\Delta t_3$, ist die Änderung des Abschaltindikators $A_n$ im Zeitpunkt $t_2$ kleiner als im Zeitpunkt $t_3$. Dies bedeutet nichts anderes, als dass der Abschaltindikator $A_n$ im Falle kurzer Zeitabstände $\Delta t_n$ in wenigen Aufweck-Bedienereignissen $B_n$ die Abschaltschwelle $S_o$ erreicht, so dass die Fahrzeugbatterie durch diese mit einiger Wahrscheinlichkeit fehlerhafte Erfassung nur gering belastet wird.

In besonders bevorzugter Ausgestaltung ist es so, dass der Abschaltindikator $A_n$ aus den Zeitabständen $\Delta t_n$ über eine Folge erfasster Aufweck-Bedienereignisse $B_n$, die in dem aktuellen Aufweck-Bedienereignis $B_n$ endet, ermittelt wird.

Vorzugsweise ergibt sich der Abschaltindikator $A_n$ aus der Summe gewichteter Zeitabstands-Wertzahlen über eine oben angesprochene Folge von erfassten Aufweck-Bedienereignissen $B_n$, die in dem aktuellen Aufweck-Bedienereignis $B_n$ endet. Dabei kann es vorgesehen sein, dass sich die Zeitabstands-Wertzahlen jeweils aus der Differenz aus dem Nenn-Zeitabstand $\Delta t_{nenn}$ und dem jeweils ermittelten Zeitabstand $\Delta t_n$ ergeben, oder, dass die Zeitabstands-Wertzahlen die ermittelten Zeitabstände $\Delta t_n$ selbst sind. In besonders bevorzugter Ausgestaltung ergibt sich für die Beschreibung des Abschaltindikators $A_n$ die folgende mathematische Funktion:

$$A_n = \sum_{i=i_0}^{n} a_{ABST}(\Delta t_{nenn} - \Delta t_i)a_{STNDZ} \cdot T_i$$

Nach der obigen Definition des Abschaltindikators $A_n$ handelt es sich bei den Zeitabstands-Wertzahlen jeweils um die Differenz aus dem Nenn-Zeitabstand $\Delta t_{nenn}$ und dem jeweils ermittelten Zeitabstand $\Delta t_n$. Dieser Zeitabstands-Wertzahl ist der optionale Wichtungsfaktor $a_{ABST}$ zugeordnet, bei dem es sich um einen konstanten Faktor, um eine Funktion von dem jeweiligen Zeitabstand $\Delta t_n$ o. dgl. handeln kann. Ganz allgemein können die den Zeitabstands-Wertzahlen zugeordneten Wichtungsfaktoren konstant oder aber veränderlich vorgesehen sein.

Ein weiterer optional vorgesehener Wichtungsfaktor $a_{STNDZ}$ ist ein Wichtungsfaktor für die Standzeit $T_n$ des Kraftfahrzeugs, die insbesondere dem Zeitraum zwischen dem Zeitpunkt des Abstellens des Kraftfahrzeugs 1 und dem Zeitpunkt des aktuellen Aufweck-Bedienereignisses $B_n$ entspricht. Alternativ zu der Standzeit $T_n$ kann hier auch der Zeitraum der Busruhe auf dem der Steuereinheit 2 zugeordneten Bus Anwendung finden.

Bei dem Wichtungsfaktor $a_{STNDZ}$ kann es sich wieder um einen konstanten Faktor, oder aber um eine Funktion von der Standzeit, von dem Zeitabstand $\Delta t_n$ o. dgl. handeln.

Es lässt sich der obigen mathematischen Funktion für den Abschaltindikator $A_n$ die Tatsache entneh-

men, dass der Abschaltindikator $A_n$ ohne weiteres iterativ ermittelt werden kann, indem jede Erfassung eines Aufweck-Bedienereignisses $B_n$ einen Iterationsschritt, insbesondere einen obigen Summationsschritt zur Bildung der den Abschaltindikator $A_n$ bildenden Summe, bildet. Dabei wird bei jeder Erfassung eines Aufweck-Bedienereignisses $B_n$ der aktuelle Abschaltindikator $A_n$ durch eine weiter oben angesprochene Änderung des vorangegangenen Abschaltindikators $A_{n-1}$ gebildet. Dies lässt sich besonders einfach umsetzen. Denkbar ist aber auch, dass die Zeitabstände $\Delta t_n$ der in Rede stehenden Folge von Aufweck-Bedienereignissen $B_n$ gespeichert und die obige Summe bei jeder neuen Erfassung entsprechend neu berechnet wird.

Mit dem vorschlagsgemäßen Verfahren ist es möglich, auf eine voraussichtlich fehlerhafte Erfassung von versehentlich oder mißbräuchlich erzeugten Aufweck-Bedienereignissen schnell zu reagieren, indem das Aufwecken der Steuereinheit 2 nach nur wenigen erfassten Aufweck-Bedienereignissen $B_n$ unterbunden wird. Bei anschließendem normalbetriebsgemässen Gebrauch stellt sich bei entsprechender Auslegung auch der Normalbetrieb zügig ein.

In manchen Fällen wird es aber notwendig sein, aus dem Abschaltbetrieb heraus vorzugsweise ohne jede Verzögerung wieder in den Normalbetrieb übergehen zu können. Dies lässt sich u.a. dadurch erreichen, dass der Abschaltindikator $A_n$ nach Erfassung einer vorbestimmten Rücksetzbedingung auf einen vorbestimmten Wert zurückgesetzt wird.

Beispielsweise handelt es sich bei der obigen Rücksetzbedingung um die Aufnahme des Fahrbetriebs, um die erfolgreiche Authentifizierung des Benutzers, um die Entriegelung des Kraftfahrzeugs oder um die Erfassung eines vorbestimmten Bedienmusters. Ein solches vorbestimmtes Bedienmuster könnte beispielsweise in zwei unmittelbar aufeinanderfolgenden Aufweck-Bedienereignissen $B_n$ bestehen. Dies trägt dem Umstand Rechnung, dass der Nutzer nach einer ersten, erfolglosen Durchführung eines Aufweck-Bedienereignisses $B_n$ reflexartig ein zweites Aufweck-Bedienereignis $B_n$ durchführen wird. Dieses Bedienmuster mit genau zwei aufeinanderfolgenden Aufweck-Bedienereignissen $B_n$ lässt sich ohne weiteres steuerungstechnisch erfassen. In diesem speziellen Fall wird der Abschaltindikator zurückgesetzt, und nicht, wie oben erläutert, in einem Iterationsschritt neu ermittelt.

Bei dem dargestellten und insoweit bevorzugten Ausführungsbeispiel stellt sich wie erläutert der Abschaltbetrieb ein, sobald der Abschaltindikator $A_n$ die Schwelle $S_o$ erreicht. Vorzugsweise ist eine weitere Erhöhung des Abschaltindikators $A_n$ aus dem Abschaltbetrieb heraus gesperrt. Damit wird verhindert, dass der Abschaltindikator $A_n$ über einen vorbestimmten Wert ansteigt. Bei einem solchen übermässigen Ansteigen würde ein Erreichen der Schwelle $S_u$ in manchen Fällen nämlich ohne einen Rücksetzvorgang kaum mehr möglich sein. Entsprechend ist es vorzugsweise auch vorgesehen, dass der Abschaltindikator $A_n$ einen vorbestimmten Wert nicht unterschreitet.

Eine besonders bevorzugte Ausgestaltung, mit der die Wahrscheinlichkeit des ungewünschten Aufweckens der Steuereinheit 2 weiter reduziert werden kann, ist eine Anpassung der Empfindlichkeit der Sensoranordnung 3 an die Höhe des jeweils ermittelten Abschaltindikators. Vereinfacht lässt sich dies so darstellen:

$$S_{empf} = S_{max} - a_{abind} \cdot A_n$$

Die Empfindlichkeit $S_{empf}$ ergibt sich hier aus der Differenz der maximal möglichen Empfindlichkeit $S_{max}$ und dem gewichteten Abschaltindikator. Der Wichtungsfaktor $a_{abind}$ kann hier ein konstanter Faktor oder eine Funktion von dem Abschaltindikator, dem aktuellen Zeitabstand o. dgl. sein. Wesentlich ist dabei die Tatsache, dass die Empfindlichkeit umso höher ist, je weiter der Abschaltindikator $A_n$ von der Abschaltschwelle $S_o$ entfernt ist.

Es darf darauf hingewiesen werden, dass zahlreiche vorteilhafte Varianten für das Aufweck-Bedienereignis $B_n$ denkbar sind. Dies trifft vor allem auf das in Fig. 1 dargestellte Kraftfahrzeug mit der dortigen Sensoranordnung 3 zu. Die Sensoranordnung 3 weist zwei Elektroden 7, 8 auf, wobei die eine Elektrode 7 nach hinten und die andere Elektrode 8 nach unten gerichtet ist. Damit ist es möglich, Personen und Gegenstände hinter und unter dem Klappenbereich des Kraftfahrzeugs 1 sensorisch zu erfassen. Beide Elektroden 7, 8 sind mit einer Sensorsteuerung 9 verbunden, die wiederum mit der Steuereinheit 2 verbunden ist. Die Steuereinheit 2 ist hier und vorzugsweise mit einer übergeordneten, nicht dargestellten Kraftfahrzeugsteuerung verbunden. Hinsichtlich der Steuerungsstruktur sind selbstverständlich zahlreiche Varianten denkbar.

Das Kraftfahrzeug 1 ist hier und vorzugsweise zusätzlich mit einem Klappenantrieb 10 ausgestattet, der das motorische Öffnen und Schließen der Heckklappe 6 erlaubt.

Die grundsätzliche Bedienungsmethodik bei dem dargestellten Kraftfahrzeug für das Öffnen der Heckklappe 6 kann nun darin bestehen, dass die motorische Betätigung der Heckklappe 6 durch eine von der Sensoranordnung 3 erfasste Fußbewegung des Benutzers ausgelöst wird. Bei dieser Fußbewegung kann es sich beispielsweise um eine Hin-Bewegung oder um eine Hin-/Rückbewegung handeln. Andere Bewegungsarten sind denkbar.

Bevor nun die motorische Betätigung der Heckklappe 6 erfolgt, muss ein oben genanntes Aufweck-Bedienereignis $B_n$ erfasst werden, das hier und vorzugsweise den Authentifizierungsdialog startet.

Bei dem Aufweck-Bedienereignis $B_n$ kann es sich um die Annäherung des Benutzers an das Kraftfahrzeug 1 handeln, die über die obere Elektrode 7 erfasst werden kann. Dann ist es vorzugsweise so, dass ein oben angesprochenes, weiteres Bedienereignis, beispielsweise eine obige Fußbewegung des Benutzers, die motorische Betätigung der Heckklappe 6 auslöst.

Denkbar ist aber auch, dass die Hin-Bewegung eines Fußes des Benutzers als Aufweck-Bedienereignis $B_n$ erfasst wird. Eine solche Hin-Bewegung lässt sich am besten durch eine kombinierte Erfassung durch beide Elektroden 7, 8 bewerkstelligen. Denkbar ist schließlich, dass die Hin- und Rückbewegung eines Fußes des Benutzers, die wiederum am besten durch beide Elektroden 7, 8 erfasst wird, das obige Aufweck-Bedienereignis $B_n$ darstellt.

Nach einer weiteren Lehre, der ebenfalls eigenständige Bedeutung zukommt, wird ein Kraftfahrzeug 1 als solches beansprucht. Das Kraftfahrzeug 1 nach dieser weiteren Lehre ist mit einem elektrischen Bordnetz ausgestattet, das sich insbesondere zur Durchführung des vorschlagsgemäßen Verfahrens eignet.

Das Bordnetz weist eine oben angesprochene und insbesondere als Keyless-Entry-Steuereinheit ausgestaltete Steuereinheit 2 auf, wobei die Steuereinheit 2 ausgehend von einem energiesparenden Standby-Modus in einen Betriebs-Modus aufweckbar ist und wobei ein vorbestimmtes Aufweck-Bedienereignis $B_n$, insbesondere die Annäherung einer Person, mittels einer Sensoranordnung 3 erfassbar ist.

Nach der weiteren Lehre ist es in Übereinstimmung mit dem vorschlagsgemäßen Verfahren so, dass jedem Aufweck-Bedienereignis $B_n$ ein Zeitabstand $\Delta t_n$ zu dem jeweils vorangegangenen Aufweck-Bedienereignis $B_{n-1}$ zugeordnet ist und dass die Anordnung so getroffen ist, dass bei der Erfassung eines Aufweck-Bedienereignisses $B_n$ der zugeordnete Zeitabstand $\Delta t_n$ ermittelt und in Abhängigkeit von dem Zeitabstand $\Delta t_n$ die Steuereinheit 2 aufgeweckt oder nicht aufgeweckt wird.

In bevorzugter Ausgestaltung löst das Aufwecken der Steuereinheit 2 einen funkbasierten Authentifizierungsdialog mit einem Funkschlüssel 4 des Benutzers aus. In weiter bevorzugter Ausgestaltung weist das Kraftfahrzeug 1 eine Tür oder Klappe, insbesondere eine Heckklappe 6, auf, der ein Tür- oder Klappenantrieb 10 zugeordnet ist. Nach erfolgreichem Authentifizierungsdialog und gegebenenfalls nach Erfassung eines weiteren Bedienereignisses $B_n$ durch die Sensoranordnung 3 wird die Heckklappe 6 des Kraftfahrzeugs 1 motorisch geöffnet.

**Patentansprüche**

1. Verfahren für den Betrieb des elektrischen Bordnetzes eines Kraftfahrzeugs (1) mit einer insbesondere als Keyless-Entry-Steuereinheit ausgestalteten Steuereinheit (2), wobei die Steuereinheit (2) ausgehend von einem energiesparenden Standby-Modus in einen Betriebs-Modus aufweckbar ist und wobei ein vorbestimmtes Aufweck-Bedienereignis ($B_n$),

insbesondere die Annäherung einer Person, mittels einer Sensoranordnung (3) erfasst wird **dadurch gekennzeichnet,** **dass** jedem Aufweck-Bedienereignis ($B_n$) ein Zeitabstand ($\Delta t_n$) zu dem jeweils vorangegangenen Aufweck-Bedienereignis ($B_{n-1}$) zugeordnet ist, dass bei der Erfassung eines Aufweck-Bedienereignisses ($B_n$) der zugeordnete Zeitabstand ($\Delta t_n$) ermittelt und in Abhängigkeit von dem Zeitabstand ($\Delta t_n$) die Steuereinheit (2) aufgeweckt oder nicht aufgeweckt wird, dass jedem Aufweck-Bedienereignis ($B_n$) ein bestimmter Wert - Abschaltindikator ($A_n$) - zugeordnet ist, der bei jeder Erfassung eines Aufweck-Bedienereignisses ($B_n$) basierend auf dessen Zeitabstand ($\Delta t_n$) ermittelt wird und dass in Abhängigkeit von der Höhe des Abschaltindikators ($A_n$) in Bezug auf eine Abschaltschwelle ($S_o$) die Steuereinheit (2) aufgeweckt oder nicht aufgeweckt wird und dass eine Änderung des aktuellen Abschaltindikators ($A_n$) gegenüber dem vorangegangenen Abschaltindikator ($A_{n-1}$) in Richtung der Abschaltschwelle ($S_o$) umso größer ist, je kleiner der aktuelle Zeitabstand ($\Delta t_n$) ist.

2. Verfahren nach Anspruch 1, **dadurch gekennzeichnet, dass** das Bordnetz ein Bussystem aufweist und dass das Aufwecken der Steuereinheit (2) mit einem zumindest teilweisen Aufwecken des Bussystems einhergeht.

3. Verfahren nach Anspruch 1 oder 2, **dadurch gekennzeichnet, dass** das Aufwecken der Steuereinheit (2) einen Authentifizierungsdialog mit einem Funkschlüssel (4) des Benutzers auslöst.

4. Verfahren nach Anspruch 3, **dadurch gekennzeichnet, dass** sich eine Änderung des aktuellen Abschaltindikators ($A_n$) gegenüber dem vorangegangenen Abschaltindikator ($A_{n-1}$) in Richtung der Abschaltschwelle ($S_o$) nur ergibt, wenn der aktuelle Zeitabstand ($\Delta t_n$) unterhalb eines Nenn-Zeitabstands ($\Delta t_{nenn}$) liegt.

5. Verfahren nach einem der vorhergehenden Ansprüche, **dadurch gekennzeichnet, dass** der Abschaltindikator ($A_n$) aus den Zeitabständen ($\Delta t_n$) über eine Folge erfasster Aufweck-Bedienereignisse ($B_n$), die in dem aktuellen Aufweck-Bedienereignis ($B_n$) endet, ermittelt wird.

6. Verfahren nach einem der vorhergehenden Ansprüche, **dadurch gekennzeichnet, dass** sich der Abschaltindikator ($A_n$) aus der Summe insbesondere gewichteter Zeitabstands Wertzahlen über eine Folge von erfassen Aufweck-Bedienereignissen ($B_n$) ergibt, die in dem aktuellen Aufweck-Bedienereignis ($B_n$) endet.

7. Verfahren nach Anspruch 6, **dadurch gekenn-**

**zeichnet, dass** mindestens ein Wichtungsfaktor konstant ist, oder, dass mindestens ein Wichtungsfaktor veränderlich ist.

8. Verfahren nach einem der vorhergehenden Ansprüche, **dadurch gekennzeichnet, dass** der Abschaltindikator ($A_n$) iterativ ermittelt wird und dass jede Erfassung eines Aufweck-Bedienereignisses ($B_n$) einen Iterationsschritt bildet.

9. Verfahren nach einem der vorhergehenden Ansprüche, **dadurch gekennzeichnet, dass** der Abschaltindikator ($A_n$) nach Erfassung einer Rücksitzbedingung auf einen vorbestimmten Wert zurückgesetzt wird.

10. Verfahren nach einem der vorhergehenden Ansprüche, **dadurch gekennzeichnet, dass** die Empfindlichkeit der Sensoranordnung (3) in Abhängigkeit von dem Abschaltindikator ($A_n$) verändert wird.

11. Kraftfahrzeug mit einem elektrischen Bordnetz, insbesondere zur Durchführung des Verfahrens nach einem der vorhergehenden Ansprüche, wobei das Bordnetz eine insbesondere als Keyless-Entry-Steuereinheit ausgestaltete Steuereinheit (2) aufweist, wobei die Steuereinheit (2) ausgehend von einem energiesparenden Standby-Modus in einen Betriebs-Modus aufweckbar ist und wobei ein vorbestimmtes Aufweck-Bedienereignis, insbesondere die Annäherung einer Person, mittels einer Sensoranordnung (3) erfassbar ist
**dadurch gekennzeichnet,**
**dass** jedem Aufweck-Bedienereignis ($B_n$) ein Zeitabstand ($\Delta t_n$) zu dem jeweils vorangegangenen Aufweck-Bedienereignis ($B_{n-1}$) zugeordnet ist, dass das elektrische Bordnetz des Kraftfahrzeuges so getroffen ist, dass bei der Erfassung eines Aufweck-Bedienereignisses ($B_n$) der zugeordnete Zeitabstand ($\Delta t_n$) ermittelt und in Abhängigkeit von dem Zeitabstand ($\Delta t_n$) die Steuereinheit (2) aufgeweckt oder nicht aufgeweckt wird, dass jedem Aufweck-Bedienereignis ($B_n$) ein bestimmter Wert - Abschaltindikator ($A_n$) - zugeordnet ist, der bei jeder Erfassung eines Aufweck-Bedienereignisses ($B_n$) basierend auf dessen Zeitabstand ($\Delta t_n$) ermittelt wird und dass in Abhängigkeit von der Höhe des Abschaltindikators ($A_n$) in Bezug auf eine Abschaltschwelle ($S_o$) die Steuereinheit (2) aufgeweckt oder nicht aufgeweckt wird.

12. Kraftfahrzeug nach Anspruch 11, **dadurch gekennzeichnet, dass** das Aufwecken der Steuereinheit (2) einen funkbasierten Authentifizierungsdialog mit einem Funkschlüssel (4) des Benutzers auslöst.

**Claims**

1. Method for operating the on-board electrical system of a motor vehicle (1) having a control unit (2), which is designed in particular as a keyless entry control unit, it being possible to wake up the control unit (2) into an operating mode starting from an energy-saving standby mode, and a predetermined wake-up operator control event ($B_n$), in particular a person approaching, being detected by means of a sensor arrangement (3), **characterized in that** each wake-up operator control event ($B_n$) has an associated time interval ($\Delta t_n$) from the respectively preceding wake-up operator control event ($B_{n-1}$), **in that** the associated time interval ($\Delta t_n$) is ascertained when a wake-up operator control event ($B_n$) is detected, and the control unit (2) is woken up or not woken up as a function of the time interval ($\Delta t_n$), **in that** each wake-up operator control event ($B_n$) has an associated specific value - switch-off indicator ($A_n$) - which is ascertained each time a wake-up operator control event ($B_n$) is detected based on the time interval ($\Delta t_n$) of said wake-up operator control event, and **in that** the control unit (2) is woken up or not woken up as a function of the level of the switch-off indicator ($A_n$) with reference to a switch-off threshold ($S_o$), and **in that** a change in the current switch-off indicator ($A_n$) relative to the preceding switch-off indicator ($A_{n-1}$) in the direction of the switch-off threshold ($S_o$) is all the greater the smaller the current time interval ($\Delta t_n$).

2. Method according to Claim 1, **characterized in that** the on-board system has a bus system, and **in that** wake up of the control unit (2) is accompanied by at least partial wake up of the bus system.

3. Method according to Claim 1 or 2, **characterized in that** wake up of the control unit (2) triggers an authentication dialog with a radio key (4) of the user.

4. Method according to Claim 3, **characterized in that** a change in the current switch-off indicator ($A_n$) relative to the preceding switch-off indicator ($A_{n-1}$) in the direction of the switch-off threshold ($S_o$) results only when the current time interval ($\Delta t_n$) is below a nominal time interval ($\Delta t_{nom}$).

5. Method according to one of the preceding claims, **characterized in that** the switch-off indicator ($A_n$) is ascertained from the time intervals ($\Delta t_n$) over a series of detected wake-up operator control events ($B_n$) which ends in the current wake-up operator control event ($B_n$).

6. Method according to one of the preceding claims, **characterized in that** the switch-off indicator ($A_n$) results from the sum of, in particular weighted, time interval value numbers over a series of detected wake-up operator control events ($B_n$) which ends in the current wake-up operator control event ($B_n$).

7. Method according to Claim 6, **characterised in that** at least one weighting factor is constant, or **in that** at least one weighting factor is variable.

8. Method according to one of the preceding claims, **characterised in that** the switch-off indicator ($A_n$) is ascertained in an iterative manner, and **in that** each detection of a wake-up operator control event ($B_n$) forms an iteration step.

9. Method according to one of the preceding claims, **characterized in that** the switch-off indicator ($A_n$) is reset to a predetermined value after a reset condition is detected.

10. Method according to one of the preceding claims, **characterized in that** the sensitivity of the sensor arrangement (3) is varied as a function of the switch-off indicator (An).

11. Motor vehicle having an on-board electrical system, in particular for carrying out the method according to one of the preceding claims, with the on-board system having a control unit (2), which is designed in particular as a keyless entry control unit, it being possible to wake up the control unit (2) into an operating mode starting from an energy-saving standby mode, and it being possible to detect a predetermined wake-up operator control event, in particular a person approaching, by means of a sensor arrangement (3), **characterized in that** each wake-up operator control event ($B_n$) has an associated time interval ($\Delta t_n$) from the respectively preceding wake-up operator control event ($B_{n-1}$), **in that** the on-board electrical system of the motor vehicle is made such that the associated time interval ($\Delta t_n$) is ascertained when a wake-up operator control event ($B_n$) is detected, and the control unit (2) is woken up or not woken up as a function of the time interval ($\Delta t_n$), **in that** each wake-up operator control event ($B_n$) has an associated specific value - switch-off indicator ($A_n$) - which is ascertained each time a wake-up operator control event ($B_n$) is detected based on its time interval ($\Delta t_n$), and **in that** the control unit (2) is woken up or not woken up as a function of the level of the switch-off indicator ($A_n$) with reference to a switch-off threshold ($S_o$).

12. Motor vehicle according to Claim 11, **characterized in that** wake up of the control unit (2) triggers a radio-based authentication dialog with a radio key (4) of the user.

## Revendications

1. Procédé de mise en fonctionnement du réseau de bord électrique d'un véhicule automobile (1) comprenant une unité de commande (2) réalisée en particulier sous la forme d'une unité de commande de télédéverrouillage dans lequel l'unité de commande (2) peut être éveillée pour passer d'un mode de veille économiseur d'énergie à un mode de fonctionnement et dans lequel un événement de commande d'éveil prédéterminé ($B_n$), en particulier le rapprochement d'une personne, est détecté au moyen d'une ensemble de détection (3),
   **caractérisé en ce qu'**un intervalle de temps ($\Delta t_n$) par rapport à l'événement de commande d'éveil ($B_{n-1}$) respectif précédent est associé à chaque événement de commande d'éveil ($B_n$), **en ce que**, lors de la détection d'un événement de commande d'éveil ($B_n$), l'intervalle de temps associé ($\Delta t_n$) est déterminé et, en fonction de l'intervalle de temps ($\Delta t_n$), l'unité de commande (2) est éveillée ou non, **en ce qu'**une valeur déterminée, à savoir un indicateur de mise hors service ($A_n$), est associée à chaque événement de commande d'éveil ($B_n$), l'indicateur étant déterminé à chaque détection d'une événement de commande d'éveil ($B_n$) sur la base de l'intervalle de temps ($\Delta t_n$) de celui-ci et **en ce que**, en fonction de la valeur de l'indicateur de mise hors service ($A_n$) par rapport à un seuil de mise hors service ($S_o$), l'unité de commande (2) est éveillée ou non et **en ce qu'**une modification de l'indicateur de mise hors service actuel ($A_n$) par rapport à l'indicateur de mise hors service précédent ($A_{n-1}$) en direction du seuil de mise hors service ($S_o$) est d'autant plus importante que l'intervalle de temps actuel ($\Delta t_n$) est faible.

2. Procédé selon la revendication 1, **caractérisé en ce que** le réseau de bord comporte un système de bus et **en ce que** l'éveil de l'unité de commande (2) s'accompagne d'un éveil au moins partiel du système de bus.

3. Procédé selon la revendication 1 ou 2, **caractérisé en ce que** l'éveil de l'unité de commande (2) déclenche un dialogue d'authentification de l'utilisateur à l'aide d'une radiocommande (4).

4. Procédé selon la revendication 3, **caractérisé en ce qu'**une modification de l'indicateur de mise hors service actuel ($A_n$) par rapport à l'indicateur de mise hors service précédent ($A_{n-1}$) dans la direction du seuil de mise hors service ($S_o$) ne se produit que lorsque l'intervalle de temps actuel ($\Delta t_n$) est inférieur à un intervalle de temps nominal ($\Delta t_{nenn}$).

5. Procédé selon l'une quelconque des revendications précédentes, **caractérisé en ce que** l'indicateur de

mise hors service ($A_n$) est déterminé à partir des intervalles de temps ($\Delta t_n$) sur une séquence d'événements de commande de veille détectés ($B_n$), qui se termine par l'événement de commande d'éveil actuel ($B_n$).

6. Procédé selon l'une quelconque des revendications précédentes, **caractérisé en ce que** l'indicateur de mise hors service ($A_n$) résulte de la somme, en particulier de valeurs numériques d'intervalles de temps pondérées sur une séquence d'événements de commande d'éveil détectés ($B_n$), qui se termine par l'événement de commande d'éveil actuel ($B_n$).

7. Procédé selon la revendication 6, **caractérisé en ce qu'**au moins un facteur de pondération est constant ou **en ce qu'**au moins un facteur de pondération est variable.

8. Procédé selon l'une quelconque des revendications précédentes, **caractérisé en ce que** l'indicateur de mise hors service ($A_n$) est déterminé de manière itérative et **en ce que** chaque détection d'un événement de commande d'éveil actuel ($B_n$) constitue un pas d'itération.

9. Procédé selon l'une quelconque des revendications précédentes, **caractérisé en ce que** l'indicateur de mise hors service ($A_n$) est réinitialisé après la détection d'une condition de réinitialisation à une valeur prédéterminée.

10. Procédé selon l'une quelconque des revendications précédentes, **caractérisé en ce que** la sensibilité de l'ensemble détecteur (3) est modifiée en fonction de l'indicateur de mise hors service ($A_n$).

11. Véhicule automobile comportant un réseau de bord électrique, notamment destiné à mettre en oeuvre le procédé selon l'une quelconque des revendications précédentes, dans lequel le réseau de bord comporte une une unité de commande (2) réalisée en particulier sous la forme d'une unité de commande de télédéverrouillage, dans lequel l'unité de commande (2) peut être éveillée pour passer d'un mode de veille économiseur d'énergie à un mode de fonctionnement et dans lequel un événement de commande d'éveil prédéterminé, en particulier le rapprochement d'une personne, est détecté au moyen d'un ensemble de détection (3),
**caractérisé en ce qu'**un intervalle de temps ($\Delta t_n$) par rapport à l'événement de commande d'éveil ($B_{n-1}$) respectif précédent est associé à chaque événement de commande d'éveil ($B_n$), **en ce que**, lors de la détection d'un événement de commande d'éveil ($B_n$), l'intervalle de temps associé ($\Delta t_n$) est déterminé et, en fonction de l'intervalle de temps ($\Delta t_n$), l'unité de commande (2) est éveillée ou non, **en ce qu'**une valeur déterminée, à savoir un indicateur de mise hors service ($A_n$), est associée à chaque événement de commande d'éveil ($B_n$), l'indicateur étant déterminé à chaque détection d'un événement de commande d'éveil ($B_n$) sur la base de l'intervalle de temps ($\Delta t_n$) de celui-ci et **en ce que**, en fonction de la valeur de l'indicateur de mise hors service ($A_n$) par rapport à un seuil de mise hors service ($S_o$), l'unité de commande (2) est éveillée ou n'est pas éveillée.

12. Véhicule automobile selon la revendication 11, **caractérisé en ce que** l'éveil de l'unité de commande (2) déclenche un dialogue d'authentification de l'utilisateur par radio au moyen d'une radiocommande (4).

Fig.1

Fig.2

EP 2 539 187 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10333894 A1
- DE 102004027541 A1

- WO 2006015418 A1